# EUROPEAN PATENT SPECIFICATION

(11) **EP 2 494 164 B1**
(45) Date of publication and mention of the grant of the patent: **30.06.2021**
(21) Application number: 10825833.6
(22) Date of filing: 13.09.2010
(51) Int. Cl.: F02C 1/02, F02C 6/16, H02J 15/00

(54) **COMPRESSED AIR ENERGY STORAGE SYSTEM WITH REVERSIBLE COMPRESSOR-EXPANDER UNIT AND CORRESPONDING METHOD**
ENERGIESPEICHERUNGSVORRICHTUNG MITTELS DRUCKLUFT MIT EINEM REVERSIBLEN VERDICHTER-EXPANDER UND ZUGEHÖRIGES VERFAHREN
SYSTÈME DE STOCKAGE D'ÉNERGIE À AIR COMPRIMÉ AVEC UNITÉ COMPRESSEUR-DÉTENDEUR RÉVERSIBLE ET PROCÉDÉ ASSOCIÉ

(30) Priority: 28.10.2009 US 607262
(43) Date of publication of application: 05.09.2012
(73) Proprietor: General Electric Company, Schenectady, NY 12345 (US)
(72) Inventor: AST, Gabor, 85748 Garching B. Munchen (DE); HOFFMANN, Stephanie Marie-Noelle, 80339 Muenchen (DE); LEHAR, Matthew, 85748 Garching B. Munchen (DE); SIMPSON, Alexander, 85748 Garching B. Munchen (DE); AALBURG, Christian, 85748 Garching B. Munchen (DE); FREY, Thomas, 85748 Garching B. Munchen (DE); AUMANN, Richard, 85747 Garching (DE); FINKENRATH, Matthias, 85748 Garching B. Muenchen (DE)
(74) Representative: BRP Renaud & Partner mbB Rechtsanwälte Patentanwälte Steuerberater
(86) International application number: PCT/US2010/048586
(87) International publication number: WO 2011/056296

(56) References cited:
- WO-A2-2007/002094
- WO-A2-2007/002094
- GB-A- 1 213 112
- GB-A- 1 213 112
- JP-A- 7 042 573
- JP-A- 9 317 495
- JP-A- H0 742 573
- JP-A- H09 317 495
- US-A- 4 281 256
- US-A- 4 281 256

## Description

### BACKGROUND OF THE INVENTION

Embodiments of the invention relate generally to compressed air energy storage (CAES) systems and, more particularly, to a CAES system having an air compression and expansion system that includes reversible compressor-expander units for compressing and expanding air during compression and expansion modes of operation.

JP 7 042573 A discloses a compressor and a motor/generator connected by a fitting joint at a time of power surplus to store compressed air and when electric power is insufficient a turbine and the motor/generator are connected by another fitting joint to generate electricity. US 4 281 256 A, JP 9 317495 A, GB 1 213 112 A and WO 2007/002094 A2 disclose compressed air energy storage systems.

Air compression and expansion systems are used in a multitude of industries for a variety of applications. For example, one such application is the use of air compression and expansion systems as the turbomachinery in generating and storing energy. Compressed air energy storage (CAES) systems typically include a compression train having a plurality of compressors that compress intake air and provide the compressed intake air to a cavern, underground storage, or other compressed air storage component. The compressed air is then later used to drive turbines to produce energy such as, for example, electrical energy. During operation of the compression stage of a CAES system, the compressed intake air is typically cooled. During operation of the expansion stage, air is discharged from underground storage through turbines and expands such that the air exits the turbines at ambient pressure.

Typically, compressors and turbines in CAES systems are each connected to a generator/motor device through respective clutches, permitting operation either solely of the compressors or solely of the turbines during appropriate selected time periods. During off-peak periods of electricity demand in the power grid (i.e., nights and weekends), the compressor train is driven through its clutch by the generator/motor. In this scheme, the generator/motor functions as a motor, drawing power from a power grid. The compressed air is then cooled and delivered to underground storage. During peak demand periods, with the turbine clutch engaged, air is withdrawn from storage and then heated and expanded through a turbine train to provide power by driving the generator/motor. In this scheme, the generator/motor functions as a generator, providing power to a power grid, for example.

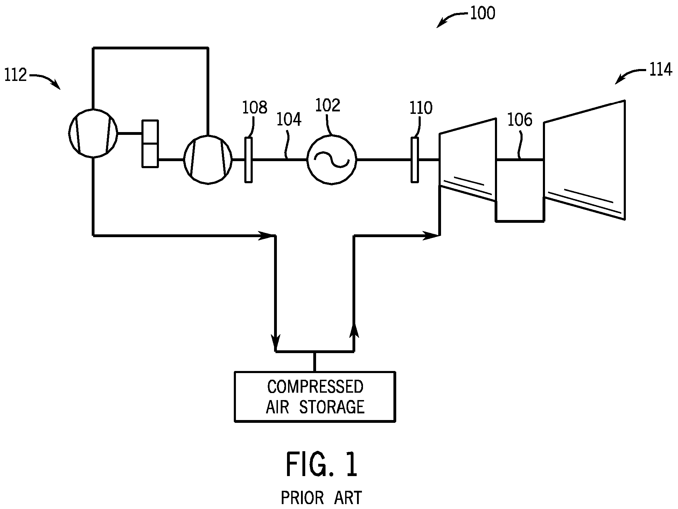

A typical arrangement of air compression and expansion system in a CAES system 100 as known in the prior art is shown in FIG. 1. The air compression and expansion system 101 is configured to alternately operate in a compression mode and an expansion mode and includes a combined motor-generator unit 102, drive shafts 104, 106, clutches 108, 110, a compressor system 112, and a turbine system 114.

Motor-generator unit 102 is electrically connected to a baseload power supply via a power transmission line, and receives power therefrom during the compression mode of operation. During operation in the compression mode, motor-generator unit 102 generates rotational power that is transmitted to compressor system 112 by way of drive shaft 104. Clutch 108 is engaged to couple the compressor system 112 to the drive shaft 104 and motor-generator unit 102, thereby driving the compressor system 112 to compress air that is stored for subsequent power generation.

Upon switching of air compression and expansion system 101 to the expansion mode of operation, the supply of power to motor-generator unit 102 is terminated such that the transfer of rotational power to drive shaft 104 is terminated and compressor system 112 is no longer powered. Clutch 110 is then engaged to couple turbine system 114 to drive shaft 106 and motor-generator unit 102, allowing for power to be transferred from turbine system 114 to motor-generator unit 102. Upon delivery of the stored compressed air to turbine system 114, rotational power is provided from turbine system 114, which is transferred to motor-generator unit 102 by way of drive shaft 106.

While the inclusion of drive shafts 104, 106, clutches 108, 110, compressor system 112, and turbine system 114 in air compression and expansion system 101 functions to generate power, it is not without its drawbacks. For example, the arrangement of multiple drive shafts 104, 106 and clutches 108, 110 requires many components and much space. Furthermore, the use of separate compressor and turbine systems increases the downtime of such units, as they are each only operable during a single mode of operation of the CAES system 100 (i.e., either the compression or expansion mode of operation). Thus, with the arrangement of the compressor system 112, and turbine system 114 in CAES system 100, an increase in capital expenditures, operating expenditures, and system footprint is realized, along with a decrease in operational efficiency.

Therefore, it would be desirable to design a system and method that overcomes the aforementioned drawbacks.

### BRIEF DESCRIPTION OF THE INVENTION

The present invention is defined in the accompanying claims.

Embodiments of the invention provide a system and method for compressing and expanding air in a compressed air energy storage (CAES) system according to claims 1 and 10. The CAES system includes an air compression and expansion system having reversible compressor-expander units for compressing and expanding air. The reversible compressor-expander units function as compressors during a compression mode of operation and alternately function as expanders during an expansion mode of operation.

Various other features and advantages will be made apparent from the following detailed description ad the drawings.

### BRIEF DESCRIPTION OF THE DRAWINGS

The drawings illustrate preferred embodiments presently contemplated for carrying out the invention.

In the drawings:
FIG. 1 is a block schematic diagram of a compressed air energy storage (CAES) system as known in the prior art.
FIG. 2 is a block schematic diagram of a CAES system not according to the invention.
FIG. 3 is a block schematic diagram of an adiabatic CAES system according to an embodiment of the present invention.

### DETAILED DESCRIPTION

According to embodiments of the invention, a compressed air energy storage (CAES) system is provided having an air compression and expansion system that includes reversible compressor-expander units for compressing and expanding air. The reversible compressor-expander units function as compressors during a compression mode of operation and alternately function as expanders during an expansion mode of operation.

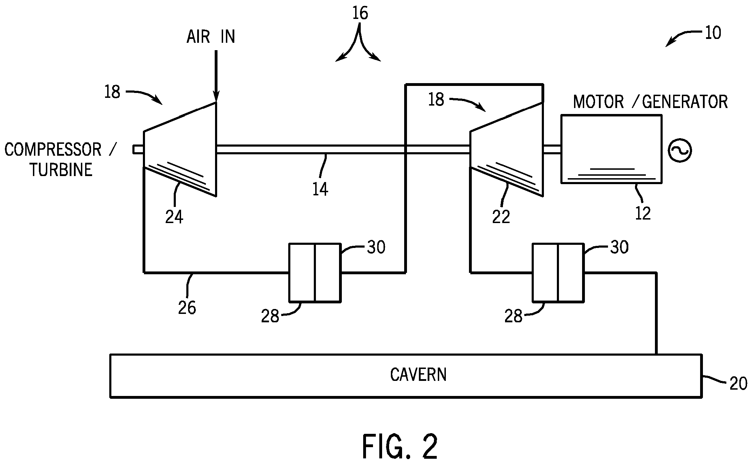

Referring to FIG. 2, a CAES system 10 not according to the invention is shown. The CAES system 10 is configured to alternately operate in a compression mode and an expansion mode as determined by an operator, so as to selectively produce energy such as, for example, electrical energy. The CAES system 10 includes a combined motor-generator unit 12, a drive shaft 14, an air compression and expansion system 16 that includes one or more reversible compressor-expander units 18, and an air storage unit or cavern 20.

As shown in FIG. 2, air compression and expansion system 16 includes two compressor-expander units 18, such that the air compression and expansion system 16 is configured as a two-stage compression and expansion system. It is recognized, however, that that the air compression and expansion system 16 could include a greater or lesser number of compressor-expander units 18. Thus, for example, air compression and expansion system 16 could be in the form of a single stage system having only one compressor-expander unit 18 or, alternatively, air compression and expansion system 16 could be in the form of a three-stage system having three compressor-expander units 18. Embodiments of the invention could thus include any number of compressor-expander units 18, as desired according to design considerations of the CAES system 10.

Each of the reversible compressor-expander units 18 is configured to alternately compress air and expand air during respective compression and expansion modes of operation of the CAES system 10. That is, reversible compressor-expander units 18 are configured to operate as compressors when driven by motor-generator unit 12 and drive shaft 14 during the compression mode of operation and are configured to operate as expanders when supplied with compressed air from the air storage unit 20 during the expansion mode of operation. As such, compressor-expander units 18 are in operation during each of the compression and expansion modes of operation. Beneficially, the frequent operation of the compressor-expander units 18 reduces issues related to unit start-up, as the units are nearly always "warm."

As reversible compressor-expander units 18 are in operation during each of the compression and expansion modes of operation, the compressor-expander units are coupled to drive shaft 14 in a clutch-less arrangement. No clutch is needed to selectively couple and decouple reversible compressor-expander units 18 to drive shaft 14, as the units 18 are configured to operate as compressors when driven by motor-generator unit 12 and drive shaft 14 during the compression mode of operation and are configured to operate as expanders when supplied with compressed air from the air storage unit 20 during the expansion mode of operation. The clutch-less arrangement provided by reversible compressor-expander units 18 thus simplifies operation of air compression and expansion system 16 in CAES system 10, lowering capital expenditure and operating expenditure costs associated with the air compression and expansion system 16, such as unit production cost, maintenance cost, etc. The use of reversible compressor-expander units 18 in air compression and expansion system 16 also reduces the overall footprint of the system as compared to a system including separate compressor and turbine units.

According to embodiments of the invention, the reversible compressor-expander units 18 may take one of a number of forms. For example, reversible compressor-expander units 18 may be configured as radial-type compressor-expander units or axial-type compressor-expander units. Reversible compressor-expander units 18 may also be configured as screw-type compressor-expander units or piston-type compressor-expander units. The reversible compressor-expander units 18 included in CAES system 10 are sized to accommodate power generation in the range of approximately 200-300 MW.

Referring still to FIG. 2, during the compression mode of operation of CAES system 10, motor-generator unit 12 is electrically connected to a baseload power source (not shown) so as to receive power therefrom. The input of electrical power causes motor-generator unit 12 to operate in a motor mode, thereby generating a mechanical output of rotational power in response to the electrical power. The rotational power is transferred to drive shaft 14, thus causing the drive shaft to rotate. Compressor-expander units 18 are thus driven by the rotational power to compress air supplied thereto. According to FIG. 2, air is compressed to a low pressure by a first compressor-expander unit 22 and subsequently passed along to a second compressor-expander unit 24 by way of a compression-expansion path 26 fluidly connecting the units. The air is further compressed to a high pressure by second compressor-expander unit 24 and is then transferred through compression-expansion path 26 to air storage unit 20 for later use.

According to FIG. 2, before the compressed air is stored in air storage unit 20, it is passed through a number of cooling units 28 that remove heat from the compressed air prior to storage of the cavern. A cooling unit 28 is positioned downstream from each of the first and second compressor-expander units 22, 24, so as to cool the air after each stage of compression.

When it is desired for CAES system 10 to operate in an expansion mode of operation, electrical power to motor-generator unit 12 is terminated, and air is retrieved from air storage unit 20 for expansion. The previously compressed air retrieved from storage unit 20 is provided to compression-expansion path 26 and passes therethrough to second compressor-expander unit 24. The compressed air causes second compressor-expander unit 24 to act as an expander/turbine, and the air is thus expanded from a high pressure to a lower pressure (i.e., a "low" pressure) by second compressor-expander unit 24. The air then continues to pass through compression-expansion path 26 to be received by first compressor-expander unit 22. First compressor-expander unit 22 is driven by the low pressure compressed air and functions as an expander/turbine to further expand the air. The expansion of the compressed air in each of the first and second compressor-expander units 22, 24 generates rotational power. The rotational power is transferred to drive shaft 14, which receives the rotational power and transfers this power to motor-generator unit 12. The motor-generator unit 12 operates in a generator mode during the expansion mode of operation, and thus generates electrical power in response to the received rotational power output from turbine system 22.

According to the present embodiment, before the compressed air is expanded by the first and second compressor-expander units 22, 24, it is passed through a number of heating units or combustors 30 that add heat to the compressed air. A heating unit 30 is positioned upstream from each of the first and second compressor-expander units 22, 24, so as to heat the compressed air prior to each stage of expansion.

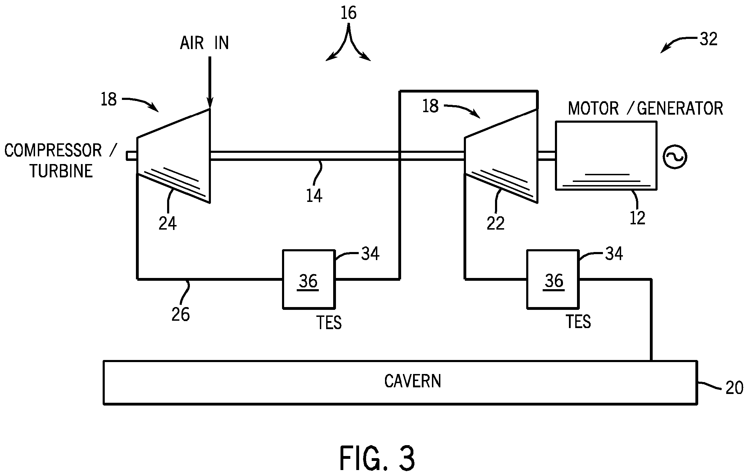

Referring now to FIG. 3, a block schematic diagram of an adiabatic compressed air energy storage (ACAES) system 32 is shown according to an embodiment of the invention. The ACAES system 32 is configured to alternately operate in a compression mode and an expansion mode as determined by an operator, so as to selectively produce energy such as, for example, electrical energy. The ACAES system 32 includes a combined motor-generator unit 12, a drive shaft 14, an air compression and expansion system 16 that includes one or more reversible compressor-expander units 18, an air storage unit or cavern 20, and one or more thermal energy storage (TES) units 34 for heating and cooling air during the compression and expansion modes of operation.

As shown in FIG. 3, air compression and expansion system 16 includes two compressor-expander units 18, such that the air compression and expansion system 16 is configured as a two-stage compression and expansion system. It is recognized, however, that that the air compression and expansion system 16 could include a greater or lesser number of compressor-expander units 18. Each of the reversible compressor-expander units 18 is configured to alternately compress air and expand air during respective compression and expansion modes of operation of the ACAES system 32. That is, reversible compressor-expander units 18 are configured to operate as compressors when driven by motor-generator unit 12 and drive shaft 14 during the compression mode of operation and are configured to operate as expanders when supplied with compressed air from the air storage unit 20 during the expansion mode of operation. As such, compressor-expander units 18 are in operation during each of the compression and expansion modes of operation.

During the compression mode of operation of ACAES system 32, motor-generator unit 12 is electrically connected to a baseload power source (not shown) so as to receive power therefrom. The input of electrical power causes motor-generator unit 12 to operate in a motor mode, thereby generating a mechanical output of rotational power in response to the electrical power. The rotational power is transferred to drive shaft 14, thus causing the drive shaft to rotate. Compressor-expander units 18 are thus driven by the rotational power to compress air supplied thereto. According to the embodiment of FIG. 3, air is compressed to a low pressure by a first compressor-expander unit 22 and subsequently passed along to a second compressor-expander unit 24 by way of a compression-expansion path 26 fluidly connecting the units. The air is further compressed to a high pressure by second compressor-expander unit 24 and is then transferred through compression-expansion path 26 to air storage unit 20 for later use.

Also during the compression mode of operation of ACAES system 32, air is passed through a TES unit 34 after each stage of compression. The TES units 34 function to cool (i.e., remove heat) the air passing through the compression-expansion path during the compression mode of operation. The TES units 34 include therein a thermal fill 36 that is composed of a heat storage material of sufficient quantity to store the heat of compression generated during the compression stage prior to storage in air storage unit 20, with the stored heat being later conveyed back to the compressed air during the expansion stage/mode of operation of ACAES system 32.

During the expansion mode of operation, air is retrieved from air storage unit 20 for expansion. The previously compressed air retrieved from storage unit 20 is provided to compression-expansion path 26 and passes therethrough to second compressor-expander unit 24. The compressed air causes second compressor-expander unit 24 to act as an expander/turbine, and the air is thus expanded from a high pressure to a lower pressure (i.e., a "low" pressure) by second compressor-expander unit 24. The air then continues to pass through compression-expansion path 26 to be received by first compressor-expander unit 22. First compressor-expander unit 22 is driven by the low pressure compressed air and functions as an expander/turbine to further expand the air. The expansion of the compressed air in each of the first and second compressor-expander units 22, 24 generates rotational power. The rotational power is transferred to drive shaft 14, which receives the rotational power and transfers this power to motor-generator unit 12. The motor-generator unit 12 operates in a generator mode during the expansion mode of operation, and thus generates electrical power in response to the received rotational power output from turbine system 22.

Also during the expansion mode of operation of ACAES system 32, air is passed through a TES unit 34 prior to each stage of expansion. The TES units 34 function to heat the air passing through the compression-expansion path 26 during the expansion mode of operation. The heat stored in TES units 34 generated during the compression mode of operation is added back to the compressed air as it passes back therethrough during the expansion mode of operation of ACAES system 32.

## Claims

1. A compressed air energy storage (CAES) system (10) alternately operable in a compression mode and an expansion mode, the CAES system comprising:
a motor-generator unit (12);
a drive shaft (14) connected to the motor-generator unit (12) and configured to transmit rotational power to and from the motor-generator unit (12);
at least one reversible compressor-expander unit (18) coupled to the drive shaft (14) and arranged to selectively compress and expand air;
an air storage unit (20) connected to the reversible compressor-expander unit (18) and configured to store compressed air received therefrom; and
at least one thermal energy storage (TES) unit (34);
**characterized in that**
the at least one reversible compressor-expander unit comprises: a first reversible compressor-expander unit (22); and a second reversible compressor-expander unit (24); and
the at least one thermal energy storage (TES) unit (34) is connected between the first reversible compressor-expander unit (22) and the second reversible compressor-expander unit (24);
wherein the first and second reversible compressor-expander units (22, 24) are fluidly connected by a compression-expansion path (26) to form a two-stage compression expansion system;
wherein the at least one reversible compressor-expander unit (18) is arranged to compress air during the compression mode and expand air during the expansion mode.

2. The CAES system of claim 1 wherein the reversible compressor-expander unit (18) is configured to operate as a compressor when driven by the drive shaft (14).

3. The CAES system of claim 1 wherein the reversible compressor-expander unit (18) is configured to operate as an expander when supplied with compressed air from the air storage unit (20).

4. The CAES system of claim 1 wherein the reversible compressor-expander unit (18) comprises a radial-type compressor-expander unit.

5. The CAES system of claim 1 wherein the reversible compressor-expander unit (18) comprises an axial-type compressor-expander unit.

6. The CAES system of claim 1 wherein the reversible compressor-expander unit (18) comprises a screw-type compressor-expander unit.

7. The CAES system of claim 1 wherein at least one reversible compressor-expander unit (18) is fixedly coupled to the drive shaft (14) in a clutch-less arrangement.

8. The CAES system of any preceding claim wherein the combined motor-generator unit (12) is configured to both generate mechanical power and electrical power; and
wherein the reversible compressor-expander unit (18) is coupled to the drive shaft (14) without use of a clutch such that the reversible compressor-expander unit (18) is arranged to operate to compress air during the compression mode and expand air during the expansion mode.

9. The CAES system of claim 8, wherein the first reversible compressor-expander unit (22) and the second reversible compressor-expander unit (24) form a multi-stage air compression and expansion system.

10. A method for compressing and expanding gas in a compressed air energy storage (CAES) system (10), the method comprising:
providing rotational power to a reversible compressor-turbine unit (18) during a compression stage of operation, the rotational power being provided to the reversible compressor-turbine unit from a combined motor-generator unit (12) and by way of a drive shaft (14);
compressing air in the reversible compressor-turbine unit (18) during the compression stage of operation in response to the rotational power;
storing the compressed air in an air storage unit (20) for a desired period of time;
transferring the compressed air from the air storage unit (20) to the reversible compressor-turbine unit (18) during an expansion stage of operation;
expanding the compressed air in the reversible compressor-turbine unit (18) during the expansion stage of operation, the reversible compressor-turbine unit (18) being driven by the transferred compressed air; and
transferring the rotational power generated by the reversible compressor-turbine unit (18) during the expansion stage of operation to the combined motor-generator unit (12) by way of the drive shaft (14), thereby causing the combined motor-generator unit (12) to generate electric power;
wherein compressing and expanding air in the reversible compressor-turbine unit (18) comprises:
compressing and expanding air in a first reversible compressor-expander unit (22) during the compression stage and the expansion stage of operation, respectively; and
compressing and expanding air in a second reversible compressor-expander unit (24) during the compression stage and the expansion stage of operation, respectively; and
removing and storing thermal energy from the air compressed by the first reversible compressor-expander unit (22) and heating the air expanded by the second reversible compressor-expander unit (24) with the stored thermal energy during the compression stage and the expansion stage of operation, respectively.

11. The method of claim 10, wherein compressing air in the reversible compressor-turbine unit (18) comprises compressing air in a radial-type compressor-expander unit.

12. The method of claim 10, wherein compressing air in the reversible compressor-turbine unit (18) comprises compressing air in an axial-type compressor-expander unit.

## Patentansprüche

1. Energiespeicherungssystem mittels Druckluft (CAES-System) (10), das abwechselnd in einem Verdichtungsmodus und in einem Expansionsmodus betriebsfähig ist, wobei das CAES-System umfasst:
eine Motor-Generator-Einheit (12);
eine Antriebswelle (14), die mit der Motor-Generator-Einheit (12) verbunden und konfiguriert ist, um Drehkraft zu und von der Motor-Generator-Einheit (12) zu übertragen;
mindestens eine reversible Verdichter-Expander-Einheit (18), die mit der Antriebswelle (14) gekoppelt und angeordnet ist, um Luft selektiv zu verdichten und zu expandieren;
eine Luftspeicherungseinheit (20), die mit der reversiblen Verdichter-Expander-Einheit (18) verbunden und konfiguriert ist, um die von dieser empfangene Druckluft zu speichern; und
mindestens eine Wärmeenergiespeicherungseinheit (TES-Einheit) (34);
**dadurch gekennzeichnet, dass**
die mindestens eine reversible Verdichter-Expander-Einheit Folgendes umfasst: eine erste reversible Verdichter-Expander-Einheit (22); und eine zweite reversible Verdichter-Expander-Einheit (24); und
die mindestens eine Wärmeenergiespeicherungseinheit (TES-Einheit) (34), die zwischen die erste reversible Verdichter-Expander-Einheit (22) und die zweite reversible Verdichter-Expander-Einheit (24) geschaltet ist;
wobei die erste und die zweite reversible Verdichter-Expander-Einheit (22, 24) durch einen Verdichtungs-Expansions-Weg (26) fluidisch verbunden sind, um ein zweistufiges Verdichtungs-Expansions-System zu bilden;
wobei die mindestens eine reversible Verdichter-Expander-Einheit (18) angeordnet ist, um Luft während des Verdichtungsmodus zu verdichten und Luft während des Expansionsmodus zu expandieren.

2. CAES-System nach Anspruch 1, wobei die reversible Verdichter-Expander-Einheit (18) konfiguriert ist, um als Verdichter zu arbeiten, wenn sie durch die Antriebswelle (14) angetrieben wird.

3. CAES-System nach Anspruch 1, wobei die reversible Verdichter-Expander-Einheit (18) konfiguriert ist, um als Expander zu arbeiten, wenn sie mit Druckluft von der Luftspeicherungseinheit (20) versorgt wird.

4. CAES-System nach Anspruch 1, wobei die reversible Verdichter-Expander-Einheit (18) eine Radialverdichter-Expander-Einheit umfasst.

5. CAES-System nach Anspruch 1, wobei die reversible Verdichter-Expander-Einheit (18) eine Axialverdichter-Expander-Einheit umfasst.

6. CAES-System nach Anspruch 1, wobei die reversible Verdichter-Expander-Einheit (18) eine Schraubenverdichter-Expander-Einheit umfasst.

7. CAES-System nach Anspruch 1, wobei mindestens eine reversible Verdichter-Expander-Einheit (18) fest mit der Antriebswelle (14) in einer kupplungslosen Anordnung gekoppelt ist.

8. CAES-System nach einem der vorstehenden Ansprüche, wobei die kombinierte Motor-Generator-Einheit (12) konfiguriert ist, um sowohl mechanische Energie als auch elektrische Energie zu erzeugen; und
wobei die reversible Verdichter-Expander-Einheit (18) ohne Verwendung einer Kupplung mit der Antriebswelle (14) gekoppelt ist, sodass die reversible Verdichter-Expander-Einheit (18) angeordnet ist, um zu arbeiten, um Luft während des Verdichtungsmodus zu verdichten und Luft während des Expansionsmodus zu expandieren.

9. CAES-System nach Anspruch 8, wobei die erste reversible Verdichter-Expander-Einheit (22) und die zweite reversible Verdichter-Expander-Einheit (24) ein mehrstufiges Luftverdichtungs- und Luftexpansionssystem bilden.

10. Verfahren zum Komprimieren und Expandieren von Gas in einem Energiespeicherungssystem mittels Druckluft (CAES-System) (10), wobei das Verfahren umfasst:
Bereitstellen von Drehkraft für eine reversible Verdichter-Turbine-Einheit (18) während einer Verdichtungsphase des Betriebs, wobei die Drehkraft der reversiblen Verdichter-Turbine-Einheit aus einer kombinierten Motor-Generator-Einheit (12) und über eine Antriebswelle (14) bereitgestellt wird;
Verdichten von Luft in der reversiblen Verdichter-Turbine-Einheit (18) während der Verdichtungsphase des Betriebs als Reaktion auf die Drehkraft;
Speichern der Druckluft in einer Luftspeicherungseinheit (20) für einen gewünschten Zeitraum;
Übertragen der Druckluft von der Luftspeicherungseinheit (20) zur reversiblen Verdichter-Turbine-Einheit (18) während einer Expansionsphase des Betriebs;
Expandieren der Druckluft in der reversiblen Verdichter-Turbine-Einheit (18) während der Expansionsphase des Betriebs, wobei die reversible Verdichter-Turbine-Einheit (18) durch die übertragene Druckluft angetrieben wird; und
Übertragen der durch die reversible Verdichter-Turbine-Einheit (18) während der Expansionsphase des Betriebs erzeugten Drehkraft zur kombinierten Motor-Generator-Einheit (12) über die Antriebswelle (14), wodurch bewirkt wird, dass die kombinierte Motor-Generator-Einheit (12) elektrische Energie erzeugt;
wobei das Verdichten und Expandieren von Luft in der reversiblen Verdichter-Turbine-Einheit (18) Folgendes umfasst:
Verdichten und Expandieren von Luft in einer ersten reversiblen Verdichter-Expander-Einheit (22) während der Verdichtungsphase bzw. der Expansionsphase des Betriebs; und
Verdichten und Expandieren von Luft in einer zweiten reversiblen Verdichter-Expander-Einheit (24) während der Verdichtungsphase bzw. der Expansionsphase des Betriebs; und
Entfernen und Speichern von Wärmeenergie aus der durch die erste reversible Verdichter-Expander-Einheit (22) verdichteten Luft und Erwärmen der durch die zweite reversible Verdichter-Expander-Einheit (24) expandierten Luft mit der gespeicherten Wärmeenergie während der Verdichtungsphase bzw. der Expansionsphase des Betriebs.

11. Verfahren nach Anspruch 10, wobei das Verdichten von Luft in der reversiblen Verdichter-Turbine-Einheit (18) das Verdichten von Luft in einer Radialverdichter-Expander-Einheit umfasst.

12. Verfahren nach Anspruch 10, wobei das Verdichten von Luft in der reversiblen Verdichter-Turbine-Einheit (18) das Verdichten von Luft in einer Axialverdichter-Expander-Einheit umfasst.

## Revendications

1. Système de stockage d'énergie à air comprimé (CAES) (10) fonctionnant alternativement dans un mode de compression et un mode de détente, le système CAES comprenant :
une unité moteur-générateur (12) ;
un arbre de transmission (14) relié à l'unité moteur-générateur (12) et configuré pour transmettre une puissance de rotation vers et depuis l'unité moteur-générateur (12) ;
au moins une unité compresseur-détendeur réversible (18) couplée à l'arbre de transmission (14) et agencée pour compresser et détendre de l'air de manière sélective ;
une unité de stockage d'air (20) reliée à l'unité compresseur-détendeur réversible (18) et configurée pour stocker de l'air comprimé reçu à partir de celle-ci ; et
au moins une unité de stockage d'énergie thermique (TES) (34) ;
**caractérisé en ce que**
l'au moins une unité compresseur-détendeur réversible comprend : une première unité compresseur-détendeur réversible (22) ; et une seconde unité compresseur-détendeur réversible (24) ; et
l'au moins une unité de stockage d'énergie thermique (TES) (34) est reliée entre la première unité compresseur-détendeur réversible (22) et la seconde unité compresseur-détendeur réversible (24) ;
dans lequel les première et seconde unités compresseur-détendeur réversibles (22, 24) sont reliées fluidiquement par un chemin de compression-détente (26) pour former un système de compression et de détente à deux étapes ;
dans lequel l'au moins une unité compresseur-détendeur réversible (18) est agencée pour compresser de l'air pendant le mode de compression et pour détendre de l'air pendant le mode de détente.

2. Système CAES selon la revendication 1, dans lequel l'unité compresseur-détendeur réversible (18) est configurée pour fonctionner comme un compresseur lorsqu'elle est entraînée par l'arbre de transmission (14).

3. Système CAES selon la revendication 1, dans lequel l'unité compresseur-détendeur réversible (18) est configurée pour fonctionner comme un détendeur lorsqu'elle est alimentée en air comprimé provenant de l'unité de stockage d'air (20).

4. Système CAES selon la revendication 1, dans lequel l'unité compresseur-détendeur réversible (18) comprend une unité compresseur-détendeur de type radial.

5. Système CAES selon la revendication 1, dans lequel l'unité compresseur-détendeur réversible (18) comprend une unité compresseur-détendeur de type axial.

6. Système CAES selon la revendication 1, dans lequel l'unité compresseur-détendeur réversible (18) comprend une unité compresseur-détendeur à vis.

7. Système CAES selon la revendication 1, dans lequel au moins une unité compresseur-détendeur réversible (18) est couplée de manière fixe à l'arbre de transmission (14) dans un agencement sans embrayage.

8. Système CAES selon l'une quelconque des revendications précédentes, dans lequel l'unité moteur-générateur combinée (12) est configurée pour générer à la fois une puissance mécanique et une puissance électrique ; et
dans lequel l'unité compresseur-détendeur réversible (18) est couplée à l'arbre de transmission (14) sans utiliser d'embrayage de telle sorte que l'unité compresseur-détendeur réversible (18) est agencée pour fonctionner pour compresser de l'air pendant le mode de compression et pour détendre de l'air pendant le mode de détente.

9. Système CAES selon la revendication 8, dans lequel la première unité compresseur-détendeur réversible (22) et la seconde unité compresseur-détendeur réversible (24) forment un système de compression et de détente d'air à plusieurs étages.

10. Procédé de compression et de détente de gaz dans un système de stockage d'énergie à air comprimé (CAES) (10), le procédé comprenant :
fournir une puissance de rotation à une unité compresseur-turbine réversible (18) pendant un étage de fonctionnement de compression, la puissance de rotation étant fournie à l'unité compresseur-turbine réversible provenant d'une unité moteur-générateur combinée (12) et par l'intermédiaire d'un arbre de transmission (14) ;
comprimer de l'air dans l'unité compresseur-turbine réversible (18) pendant l'étage de fonctionnement de compression en réponse à la puissance de rotation ;
stocker l'air comprimé dans une unité de stockage d'air (20) pendant une période de temps souhaitée ;
transférer l'air comprimé depuis l'unité de stockage d'air (20) jusqu'à l'unité compresseur-turbine réversible (18) pendant un étage de fonctionnement de détente ;
détendre l'air comprimé dans l'unité compresseur-turbine réversible (18) pendant l'étage de fonctionnement de détente, l'unité compresseur-turbine réversible (18) étant entraînée par l'air comprimé transféré ; et
transférer la puissance de rotation générée par l'unité compresseur-turbine réversible (18) pendant l'étage de fonctionnement de détente vers l'unité moteur-générateur combinée (12) par l'intermédiaire de l'arbre de transmission (14), amenant ainsi l'unité moteur-générateur combinée (12) à générer de l'énergie électrique ;
dans lequel compresser et détendre de l'air dans l'unité compresseur-turbine réversible (18) comprend :
compresser et détendre de l'air dans une première unité compresseur-détendeur réversible (22) pendant l'étage de compression et l'étage de fonctionnement de détente, respectivement ; et
compresser et détendre de l'air dans une seconde unité compresseur-détendeur réversible (24) pendant l'étage de compression et l'étage de fonctionnement de détente, respectivement ; et
extraire et stocker de l'énergie thermique de l'air comprimé par la première unité compresseur-détendeur réversible (22) et chauffer l'air détendu par la seconde unité compresseur-détendeur réversible (24) avec l'énergie thermique stockée pendant l'étage de compression et l'étage de fonctionnement de détente, respectivement.

11. Procédé selon la revendication 10, dans lequel compresser de l'air dans l'unité compresseur-turbine réversible (18) comprend compresser de l'air dans une unité compresseur-détendeur de type radial.

12. Procédé selon la revendication 10, dans lequel compresser de l'air dans l'unité compresseur-turbine réversible (18) comprend compresser de l'air dans une unité compresseur-détendeur de type axial.
